# EUROPÄISCHE PATENTSCHRIFT

(11) **EP 1 277 422 B1**
(45) Veröffentlichungstag und Bekanntmachung des Hinweises auf die Patenterteilung: **11.10.2006**
(21) Anmeldenummer: 02016093.3
(22) Anmeldetag: 19.07.2002
(51) Int. Cl.: A47B 88/10

(54) **Kugelgelagerte Teleskopschiene**
Telescopic slide with ball-bearing
Glissière télescopique avec roulement à billes

(30) Priorität: 19.07.2001 DE 10135161
(43) Veröffentlichungstag der Anmeldung: 22.01.2003
(73) Patentinhaber: Accuride International GmbH, 65573 Diez (DE)
(72) Erfinder: Geberzahn, Markus, 65589 Hadamar (DE); Bignell, Martin, Northamptonshire NN7 2NR (GB)
(74) Vertreter: Weber, Dieter

(56) Entgegenhaltungen:
- EP-A- 0 574 164
- DE-A- 19 511 999
- US-A- 5 775 788
- US-A- 6 132 020

## Beschreibung

Die Erfindung betrifft eine kugelgelagerte Teleskopschiene, wie sie für Einschübe in Möbeln, Elektronikschränken, Backöfen usw. Verwendung findet. Bei Teleskopschienen unterscheidet man zwischen Vollauszügen und Teilauszügen. Vollauszüge sind dadurch gekennzeichnet, daß ihre Gesamtlänge bei vollem Auszug aller Schienenelemente größer ist als die doppelte Länge der Teleskopschiene mit eingeschobenen Schienenelementen. Da sich zwei gegeneinander gleitend gelagerte Schienenelemente aus Stabilitätsgründen und wegen der Länge, die die zwischen den Schienenelementen befindlichen Kugellager einnehmen, nicht bis auf eine Länge ausziehen läßt, die der Summe der Längen beider Schienenelemente entspricht, bestehen Vollauszüge in der Regel aus drei, manchmal auch mehr gegeneinander gleitend gelagerten Schienenelementen. Mit einer Vollauszugschiene kann ein Schubelement, wie eine Schublade, beispielsweise in seiner gesamten Länge bis vor den Korpus herausgezogen werden. Vollauszüge mit drei Schienenelementen weisen in der Regel zwei Außenschienen zur Befestigung an einem Schubelement einerseits und an einem Korpus andererseits auf, die jeweils gegen eine dazwischen angeordnete Innenschiene gleitend, z. B. über Kugeln, gelagert sind. Teilauszüge sind hingegen dadurch gekennzeichnet, daß ihre Gesamtlänge bei vollem Auszug der Schienen kleiner ist als die doppelte Länge der Teleskopschiene mit eingeschobenen Schienenelementen. Schubelemente, die über Teilauszüge an einer Korpuswand befestigt sind, lassen sich in der Regel nicht in ihrer gesamten Länge bis vor den Korpus herausziehen. Teilauszugteleskopschienen weisen üblicherweise genau zwei gegeneinander gleitend gelagerte Schienenelemente auf. Nachfolgend werden auch für diese beiden Schienen die Bezeichnungen Außenschiene und Innenschiene verwendet.

Die vorliegende Erfindung betrifft eine kugelgelagerte Vollauszugteleskopschiene mit zwei Außenschienen und einer im Querschnitt hantelförmigen Innenprofilschiene, die an ihren in Richtung ihrer Längsachse gegenüberliegenden Endbereichen jeweils zwei Kugelführungen aufweist, wobei zwischen der Innenfläche der Außenschienen und den Kugelführungen der Innenprofilschiene satzweise Kugeln abwälzbar angeordnet sind, wobei die beiden Kugelsätze an jedem Endbereich der Innenprofilschiene in Richtung der Längsachse sowie senkrecht zur Längsachse der Innenprofilschiene gegeneinander versetzt sind und jede der beiden Außenschienen jeweils die an einem der Endbereiche der Innenprofilschiene angeordneten Kugelsätze umgreift.

Bei dieser Vollauszugsschiene mit drei Schienenelementen ist jede der beiden Außenschienen über abwälzbare Kugeln gegenüber der Innenprofilschiene verschiebbar gelagert, und jeweils eine der beiden Außenschienen ist für eine Befestigung an einem Korpus und die andere der beiden Außenschienen für eine Befestigung an einem Auszug, wie z.B. einer Schublade, vorgesehen.

Die vorliegende Erfindung betrifft aber auch eine kugelgelagerte Teilauszugteleskopschiene mit einer Außenschiene und einer Innenprofilschiene, die einen mit zwei Kugelführungen versehenen Endbereich und einen sich davon ausgehend erstreckenden, im Querschnitt länglich ausgebildeten Steg aufweist, wobei zwischen der Innenfläche der Außenschiene und den Kugelführungen der Innenprofilschiene zwei Kugelsätze abwälzbar angeordnet sind, die beiden Kugelsätze am Endbereich der Innenprofilschiene in Richtung der Längsachse sowie senkrecht zur Längsachse des Steges gegeneinander versetzt sind und die Außenschiene die am Endbereich der Innenprofilschiene angeordneten Kugelsätze umgreift.

Die EP 0 650 339 B1beschreibt eine Auszugführung für einen Schubkasten mit zwei Außenschienen und einer mit mehreren Kugelführungen versehenen, die beiden Außenschienen miteinander verbindenden Innenprofilschiene, wobei die Kugeln satzweise und zwischen den beiden Außenflächen der Innenprofilschiene und den Innenflächen der Außenschienen abwälzbar angeordnet und die Außenschienen im Querschnitt winkelförmig ausgebildet sind, wobei die beiden einander gegenüberliegenden freien Randbereiche der Außenschienen zur Bildung von Kugelführungen jeweils in einem nach innen gerichteten Bogen verlaufen. Die Innenprofilschiene ist im Querschnitt hantelförmig ausgebildet, und an jedem in Richtung der Längsachse der Innenprofilschiene gegenüberliegenden Endbereich sind jeweils drei Kugelführungen und drei Sätze von abwälzbaren Kugeln angeordnet, die von einer der beiden winkelförmigen Außenschienen umgriffen werden. Die Teleskopschiene erfordert den Einbau von mehr Kugeln als bei herkömmlichen Teleskopschienen, und der Aufbau von Kugelkäfigen, die drei Kugelsätze gleichzeitig halten können, ist erheblich aufwendiger als bei bekannten Teleskopschienen mit zwei Kugelsätzen pro Außenschiene.

Teleskopschienen werden nach dem Zusammenbau üblicherweise auf ihre Laufeigenschaften geprüft, bevor sie ausgeliefert werden. Ein zu leichter oder zu schwerer Lauf läßt sich bei herkömmlichen Teleskopschienen innerhalb gewisser Grenzen dadurch korrigieren, daß man Außenschiene etwas zusammendrückt oder aufweitet, um einen festeren oder lockereren Sitz der Kugeln in den Kugelführungen zwischen Außen- und Innenschiene zu erreichen. Bei Teleskopschienen der in der EP 0 650 339 B1 beschriebenen Art mit drei in einem rechten Winkel zueinander angeordneten Kugeln ist eine solche Nachjustierung der Laufeigenschaften jedoch nicht ohne weiteres möglich. Ein Zusammendrücken oder Aufweiten der beiden Endabschnitte der winkelförmigen Außenschiene würde zwar die Laufeigenschaften der Kugeln an diesen beiden Endabschnitten in der gewünschten Weise beeinflussen, jedoch würde man bezüglich des dritten Kugelsatzes im Winkel der Außenschiene die gewünschte Veränderung nicht oder gerade die umgekehrte Wirkung bezüglich der Laufeigenschaften erzielen.

Herkömmliche bekannte Teleskopschienen haben eine aus zwei rückseitig miteinander verschweißten, im wesentlichen C-förmigen Profilen zusammengesetzte Innenschiene, wobei jedes der C-förmigen Profile zwei Kugelführungen an der Außenseite ihrer C-Schenkel aufweist. Die in diesen Kugelführungen abwälzbaren Kugeln jeder der beiden C-förmigen Hälften der Innenschiene werden von einer im Querschnitt ebenfalls C-förmigen Außenschiene umgriffen, so daß die Höhen der beiden Außenschienen größer sind als die Höhe der Innenschiene. Die Befestigung dieser Teleskopschiene an einem Korpus einerseits und an einem Auszug andererseits erfolgt in der Regel an den jeweiligen Rückseiten der im Querschnitt C-förmigen Außenschienen. Eine Befestigung von Korpus bzw. Auszug an den Ober- oder Unterseiten der dort sehr schmalen und in der Regel gekrümmt verlaufenden C-förmigen Außenschienen ist nicht praktikabel oder nur unter Verwendung zusätzlich angebrachter Befestigungselemente möglich. Ein weiterer Nachteil dieser herkömmlichen Teleskopschienen ist, daß Sie zwar sehr gut vertikale Kräfte aufnehmen, die auch üblicherweise den Hauptanteil der wirkenden Kräfte ausmachen. Durch seitliche bzw. horizontal wirkende Kräfte werden die Laufeigenschaften solcher herkömmlicher Schienen jedoch negativ beeinflußt. Seitliche Kräfte wirken immer dann auf eine Teleskopschiene, wenn ein Auszug, wie eine Schublade, von einer Bedienperson nicht exakt nach vorne aus dem Korpus herausgezogen wird.

Die DE 195 11 999 A1 beschreibt als Vollauszüge mit drei Schienenelementen ausgebildete Ausziehführungen für den Auszug von Schubladen an einem Möbelkorpus mit einer an einer Schublade befestigbaren Laufschiene und einer am Möbelkorpus befestigbaren Führungsschiene sowie einer zwischen diesen Schienen angeordneten, im Querschnitt hantelförmig ausgebildeten Zwischenschiene. Zwischen den Schienen sind in Käfigen gehalterte, jeweils auf Abrollbahnen der Laufschiene bzw. der Führungsschiene und den Endabschnitten der Zwischenschiene abgestützte Wälzkörper abwälzbar vorgesehen. An jedem Endabschnitt der Zwischenschiene sind jeweils drei Abrollbahnen und drei entsprechende Sätze von Wälzkörpern angeordnet, nämlich ein Satz von käfiggelagerten Rollen und zwei gegenüber den Rollen versetzte käfiggelagerte Kugelsätze. Insoweit entsprechen die Ausziehführungen der DE 195 11 999 A1 hinsichtlich der Anzahl und Anordnung der Wälzkörper im wesentlichen den bekannten Ausführungen mit jeweils drei Kugelsätzen, wobei lediglich einer von drei Kugelsätzen in der DE 195 11 999 A1 durch das gleichwirkende Mittel der Rollen ersetzt wurde. Die vorgenannten Nachteile von Ausführungen mit jeweils drei Kugelsätzen treffen auch auf die Ausführungen gemäß der DE 195 11 999 A1 zu.

Die US-Patente 6,132,020 und 5,775,788 beschreiben als Voll- oder Teilauszüge ausgebildete Teleskopführungen, bei denen an jedem Endbereich einer Innenprofilschiene genau drei Kugelsätze vorgesehen sind, wie dies auch bei der EP 0 650 339 B1 der Fall ist.

Der vorliegenden Erfindung liegt die Aufgabe zugrunde, Teleskopschienen der eingangs beschriebenen Art so auszubilden, daß die Nachteile der bekannten Teleskopschienen überwunden und die Vorteile erzielt werden. Insbesondere sollen sie materialsparend herstellbar und platzsparend sein, eine Befestigung von Korpus bzw. Auszug auch an den Ober- bzw. Unterseiten der Teleskopschiene ermöglichen, nach dem Zusammenbau eine Nachjustierung erlauben und auch seitliche Kräfte aufzunehmen in der Lage sein, um ein gutes Laufverhalten zu bieten.

Diese Aufgabe wird durch Teleskopschienen der eingangs genannten Art gelöst, die im Falle von Vollauszugschienen dadurch gekennzeichnet sind, daß an den gegenüberliegenden Endbereichen der Innenprofilschiene jeweils genau zwei Sätze von Wälzkörpem, nämlich Kugelsätze, angeordnet sind. Erfindungsgemäße Teilauszugschienen sind dadurch gekennzeichnet, daß an dem Endbereichen der Innenprofilschiene genau zwei Sätze von Wälzkörpern, nämlich Kugelsätze, angeordnet sind.

Gegenüber der aus der EP 0 650 339 B1 bekannten Teleskopschiene benötigen die erfindungsgemäßen Teleskopschienen nur jeweils zwei Kugelsätze für die gleitende Verbindung zwischen einer Außenschiene und einem Endbereich der Innenprofilschiene. Es hat sich überraschenderweise gezeigt, daß die Verwendung von nur zwei Kugelsätzen genügt, um eine bei hohen Belastungen ausreichend stabile Teleskopschiene herzustellen. Hierdurch wird Material für zusätzliche Kugelsätze eingespart. Zudem kann diese Teleskopschiene platzsparender hergestellt werden, da der jeweilige Raum für einen dritten Kugelsatz an jeder der beiden Außenschienen nicht benötigt wird. Die Außenschiene kann daher in diesem Bereich abgeflacht sein. Zudem erlaubt die Verwendung von nur zwei Kugelsätzen für eine Außenschiene die Verwendung von einfachen, herkömmlichen Kugelkäfigen zum Halten der Kugeln. Da die erfindungsgemäße Teilauszugschiene vom Endbereich bis zur Mitte des sich davon ausgehend erstreckenden Steges im Aufbau im wesentlichen einer halben Vollauszugschiene entspricht, gelten die hierin für die Vollauszugschiene genannten Vorteile und Ausgestaltungsmöglichkeiten der Endbereiche entsprechend auch für die erfindungsgemäße Teilauszugschiene.

Aus der erfindungsgemäßen Ausführung der Vollauszugschiene ergeben sich eine Reihe weiterer Vorteile. Durch den Versatz der beiden Kugelsätze an jedem Endbereich der Innenprofilschiene in Richtung der Längsachse der Innenprofilschiene ist es möglich, die Außenschienen so anzuordnen, daß sie sich auf gegenüberliegenden Seiten der Längsachse der Innenprofilschiene überlappen, wodurch die Bauhöhe reduziert wird. Die Außenschienen können bei beiden Schienenausführungen mit Vorteil im Querschnitt im wesentlichen C-förmig ausgebildet sein, wodurch sich eine noch kompaktere Bauweise ergibt. Es kann jedoch auch zweckmäßig sein, die Außenschienen winkelförmig auszubilden, um für die Montage der Teleskopschiene an einem Korpus einerseits und/oder einem Auszug andererseits größere Befestigungsflächen bereitzustellen. Zweckmäßigerweise haben bei der Vollauszugschiene beide Außenschienen den gleichen Querschnitt. Dies erlaubt die Verwendung des gleichen Profils für beide Schienenelemente, wodurch Herstellungskosten eingespart werden. Es kann jedoch auch besonders vorteilhaft sein, unterschiedliche Profile für die beiden Außenschienen zu verwenden, z. B. wenn für die Befestigung eines Schubelementes an der Außenschiene eine gewisse Auflagefläche benötigt wird und man deshalb hierfür ein winkelförmiges Profil wählt, die gegenüberliegende Außenschiene jedoch aus Platzgründen oder zur Materialeinsparung im wesentlichen C-förmig ausgewählt wird.

Der Versatz der beiden Kugelsätze, d. h. die gegenüber der Vertikalen schräge Anordnung der Kugelsätze, hat den weiteren Vorteil gegenüber herkömmlichen Teleskopschienen, daß zusätzlich zu den vertikal wirkenden auch von der Seite bzw. horizontal wirkende Kräfte gut aufgenommen werden, wodurch die erfindungsgemäße Teleskopschienen gute Laufeigenschaften hat.

Bei einer bevorzugten Ausführungsform der erfindungsgemäßen Teilauszugteleskopschiene erstreckt sich von dem dem Endbereich gegenüberliegenden Ende des Steges aus ein Befestigungselement. Dieses ist im Querschnitt vorzugsweise winkelförmig und dient der Befestigung der Teleskopschiene an einem Schubelement oder einer Korpuswand. Das Befestigungselement erstreckt sich zweckmäßigerweise über die gesamte Länge der Innenprofilschiene. Dies vereinfacht die Fertigung der Innenprofilschiene und gewährleistet gute Stabilität. Das Befestigungselement kann aber auch vorteilhaft nur an einigen bestimmten Abschnitten über die Länge der Innenprofilschiene vorgesehen sein. Bei der Fertigung der Innenprofilschiene durch Biegen eines Bleches sind dann entsprechende Bereiche, in denen das Befestigungselement nicht vorhanden sein soll, auszuschneiden, auszustanzen oder anderweitig zu entfernen.

Bei bevorzugten Ausführungsformen der erfindungsgemäßen Teleskopschiene ist bei Vollauszügen der die beiden Endbereiche der im Querschnitt hantelförmigen Innenprofilschiene verbindende Abschnitt der Innenprofilschiene bzw. bei Teilauszügen der den Endbereich und das gegenüberliegende Befestigungselement verbindende Steg zumindest bereichsweise gegenüber der Vertikalen versetzt. Im Normalfall verläuft der die Endbereiche verbindende Abschnitt der Innenprofilschiene vertikal und somit parallel zur Korpuswand, an der die Teleskopschiene befestigt ist. Da beim Ausfahren eines Schubkastens oder eines anderen Auszuges auch durch die besondere Anordnung der Kugelführungen nicht nur vertikale, sondern auch seitliche Kräfte wirken, kann es in dem die Endbereiche verbindenden, meist länglich ausgebildeten Abschnitt der Innenprofilschiene zu einer elastischen Verformung oder Verwindung kommen, wodurch je nach Belastung Stabilität und Gleiteigenschaften nachteilig beeinflußt werden können. Durch seitlichen Versatz des Mittelabschnitts bzw. Steges der Innenprofilschiene können solche Kräfte von der Innenprofilschiene besser aufgenommen werden. Vorteilhaft ist es daher, wenn dieser die Endbereiche der Innenprofilschiene verbindende Abschnitt im wesentlichen in Richtung der Resultierenden aus den auf die Teleskopschiene einwirkenden vertikalen und seitlichen Kräften steht.

Dieser Mittelabschnitt der Innenprofilschiene kann vorteilhaft auf verschiedene Weisen ausgestaltet sein. Bei einer besonders bevorzugten Ausführungsform der Erfindung verläuft dieser Abschnitt der Innenprofilschiene im wesentlichen geradlinig, jedoch gegenüber der Vertikalen schrägstehend. Bei weiteren vorteilhaften Ausführungsformen verläuft dieser Abschnitt im wesentlichen bogenförmig oder ist ein- oder mehrmals in gleichen oder entgegengesetzten Richtungen gekröpft oder zick-zack-förmig ausgebildet.

Weitere Vorteile, Merkmale und Ausführungsformen der vorliegenden Erfindung werden anhand der nachfolgenden Beschreibung und der dazugehörigen Figuren deutlich.

Die Figuren 1 bis 20 zeigen verschiedene Ausführungsformen erfindungsgemäßer Teleskopschienen, die als Vollauszugschienen ausgebildet sind.

Die Figuren 21 bis 24 zeigen verschiedene Ausführungsformen erfindungsgemäßer Teleskopschienen, die als Teilauszugschienen ausgebildet sind.

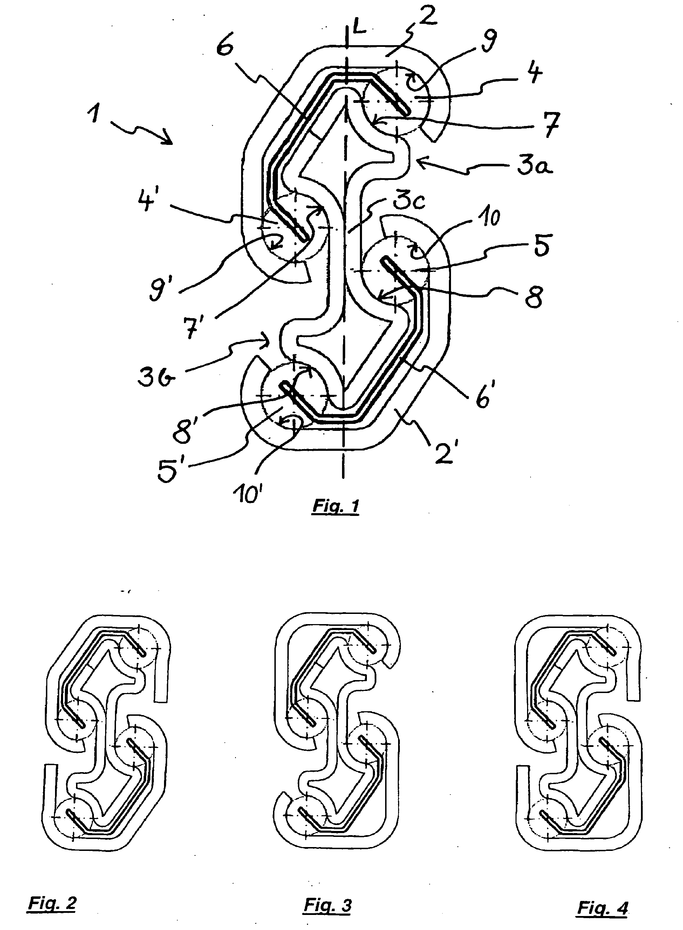

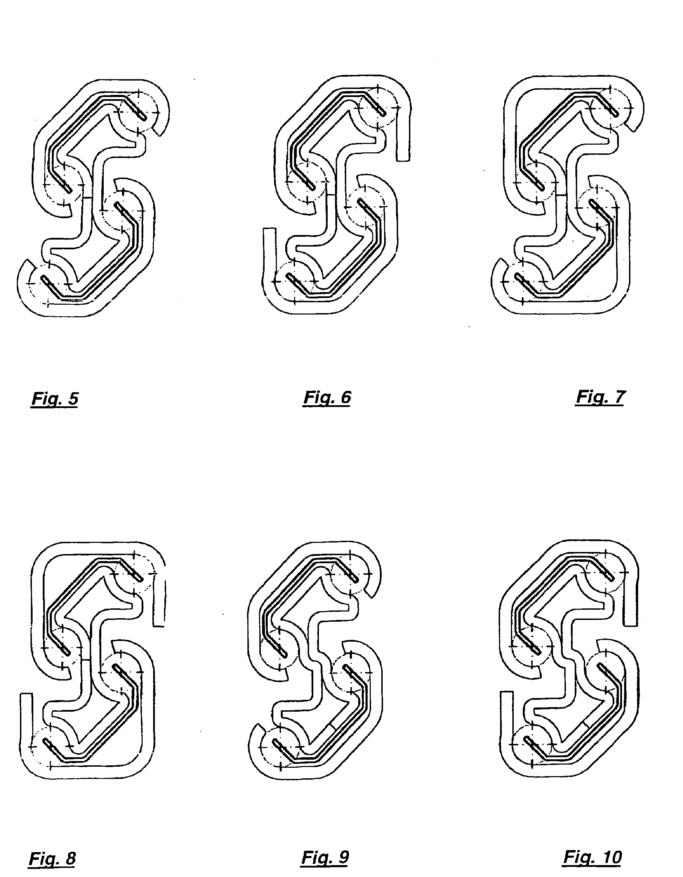

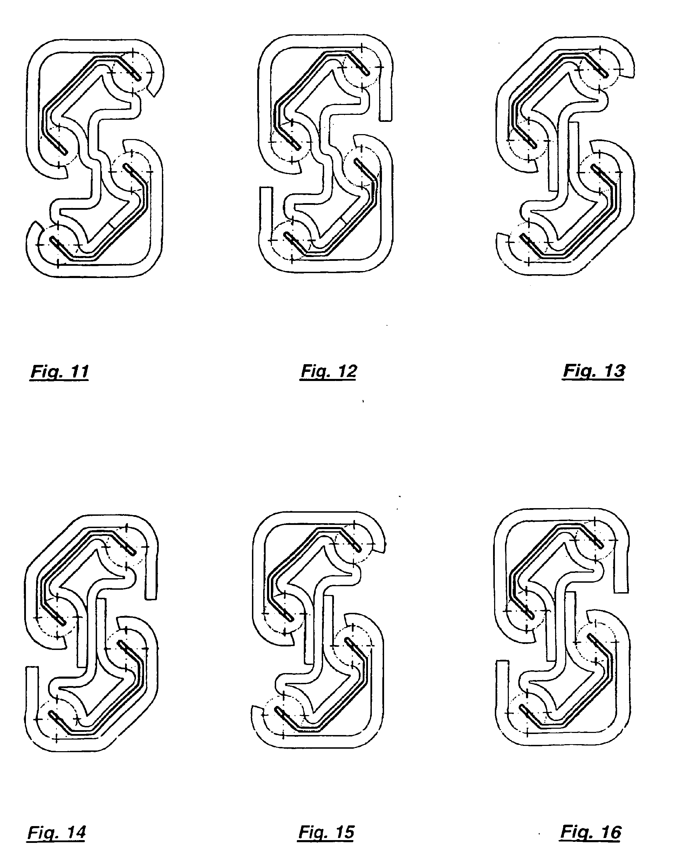

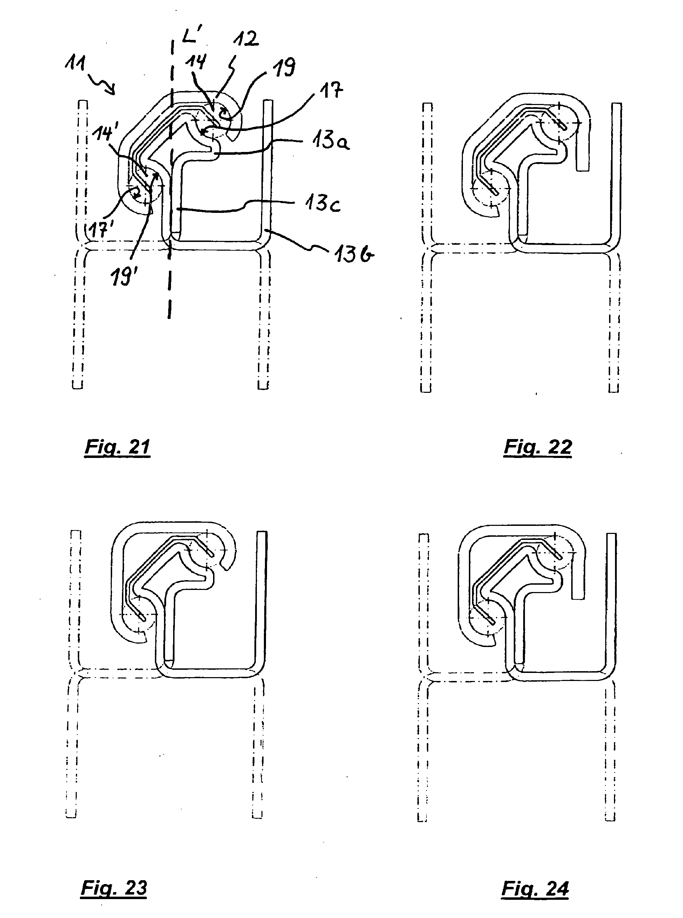

Die in den Figuren 1 und 21 dargestellten Teleskopschienen sind zur Bezeichnung der einzelnen Teile der Teleskopschiene mit Bezugszahlen versehen. In den Darstellungen der Figuren 2 bis 20 bzw. 22 bis 24 wurden diese Bezugszahlen aus Gründen der Übersichtlichkeit weggelassen. Auch wenn die Teleskopschienen der Figuren 2 bis 20 bzw. 21 bis 24 in einzelnen Details Unterschiede zu den Teleskopschienen aus den Figuren 1 und 22 aufweisen, ist es klar, welchen Bezugszahlen aus Figur 1 bzw. 21 die entsprechenden Teile in den Figuren 2 bis 20 bzw. 22 bis 24 entsprechen.

Figur 1 zeigt eine erfindungsgemäß als Vollauszug ausgebildete kugelgelagerte Teleskopschiene 1 mit zwei Außenschienen 2 und 2' und einer im Querschnitt hantelförmigen Innenprofilschiene 3. Die Längsachse L der Innenprofilschiene 3 ist in Figur 1 als unterbrochene Linie in vertikaler Richtung dargestellt. Die Innenprofilschiene 3 hat zwei in Richtung ihrer Längsachse L einander gegenüberliegende Endbereiche 3a und 3b und einen dazwischenliegenden, diese beiden Endbereiche verbindenden, gestreckten Abschnitt 3c. Die Endbereiche 3a und 3b der Innenprofilschiene 3 weisen jeweils zwei Kugelführungen 7, 7' und 8, 8' sowie in diesen Kugelführungen satzweise abwälzbar angeordnete Kugeln 4, 4' und 5, 5' auf. Die beiden Kugelsätze 4, 4' bzw. 5, 5' an jedem Endbereich 3a bzw. 3b sind in Richtung der Längsachse L der Innenprofilschiene 3 gegeneinander versetzt, so daß eine gedachte Linie durch ein Paar von Kugelsätzen 4, 4' bzw. 5, 5' mit der Längsachse L einen Winkel von etwa 45° oder weniger bildet. Die Außenschienen 2 und 2' der Teleskopschiene aus Figur 1 sind im wesentlichen C-förmig ausgebildet und umgreifen mit ihren einander gegenüberliegenden freien Endabschnitten bzw. C-Schenkeln, welche nach innen gekrümmt verlaufen, die zwei zu einem Endbereich 3a bzw. 3b der Innenprofilschiene 3 gehörenden Kugelsätze 4, 4' bzw. 5, 5'. Bei der Ausführungsform gemäß Figur 1, wie auch bei den Ausführungsformen gemäß den Figuren 2 bis 20, sind Kugelkäfige 6 und 6' vorgesehen, welche die Kugeln der Kugelsätze zusammenhalten. Die an den im Querschnitt freien Enden der Außenschienen 2 und 2' gekrümmt nach innen verlaufenden Endabschnitte bilden auf ihrer Innenseite Kugelführungen 9, 9' und 10, 10', die den Kugelführungen an der Innenprofilschiene 3 gegenüberliegen.

Die Innenprofilschienen 3 der Ausführungsformen nach den Figuren 1 bis 20 sind jeweils als ein zu einem Profil gebogenes Blech ausgebildet, das im Inneren Hohlräume aufweist. Zur Verbesserung der Stabilität einer solchen aus einem Blech gebogenen Innenschiene werden die Enden des Blechs bei einer bevorzugten Ausführungsform verschweißt. Alternativ können die Innenprofilschienen jedoch auch massiv aus Metall, Kunststoff oder einem anderen Material hergestellt sein. Bei einer weiteren bevorzugten Ausführungsform ist die Innenprofilschiene aus einem im Querschnitt im wesentlichen runden oder eckigen Rohr geformt. Gegenüber der Formung der Innenprofilschienen durch Biegen aus einem Blech hat dies den Vorteil, daß das Profil im Querschnitt keine freien Enden aufweist, wodurch ein Verschweißen der Enden überflüssig und die Stabilität erhöht wird.

Die Teleskopführungen der Figuren 2, 3 und 4 weisen eine Innenprofilschiene 3 mit gleichem Querschnittsprofil wie die Ausführungsform gemäß Figur 1 auf. Auch die Anordnung der Kugelsätze und der Kugelkäfige ist die gleiche. Bei der Teleskopschiene gemäß Figur 2 ist jeweils einer der beiden Endabschnitte der C-förmigen Außenschienen 2 und 2' parallel zur Längsachse L verlängert, wodurch ein weiter Bereich der Innenprofilschiene 3 abgedeckt und das Eindringen von Schmutz bis zu einem gewissen Maß verhindert wird. Bei den Ausführungsformen der Figuren 3 und 4 sind die Außenschienen 2 und 2' jeweils winkelförmig ausgebildet, wobei die Außenschienen gemäß Figur 4 jeweils noch eine parallel zur Längsachse verlaufende Verlängerung aufweisen, wie sie in Figur 2 ebenfalls zu sehen ist. Die Außenschienen der Figuren 5 bis 8, 9 bis 12, 13 bis 16 bzw. 17 bis 20 haben jeweils den gleichen Querschnitt wie die Außenschienen aus den Figuren 1 bis 4.

Die Innenprofilschienen 3 der Ausführungsformen gemäß den Figuren 5 bis 8 weisen ebenfalls einen vertikal verlaufenden Mittelabschnitt 3c auf, wobei die Endbereiche 3a und 3b jeweils etwas breiter ausgestaltet sind als in den Figuren 1 bis 4 und die gedachte Linie zwischen jeweils einem Paar von Kugelsätzen 4, 4' bzw. 5, 5' einen etwas größeren Winkel mit der Längsachse L einnimmt als in den Figuren 1 bis 4. Die Außenschienen 2 und 2' sind bei diesen Ausführungsformen in der Horizontalen gegeneinander versetzt. Hierdurch ergibt sich der Vorteil, daß die mit dem Auszug verbundene Außenschiene einen größeren Abstand zum Korpus hat und somit ein Schleifen dieser Schiene am Korpus besser verhindert wird.

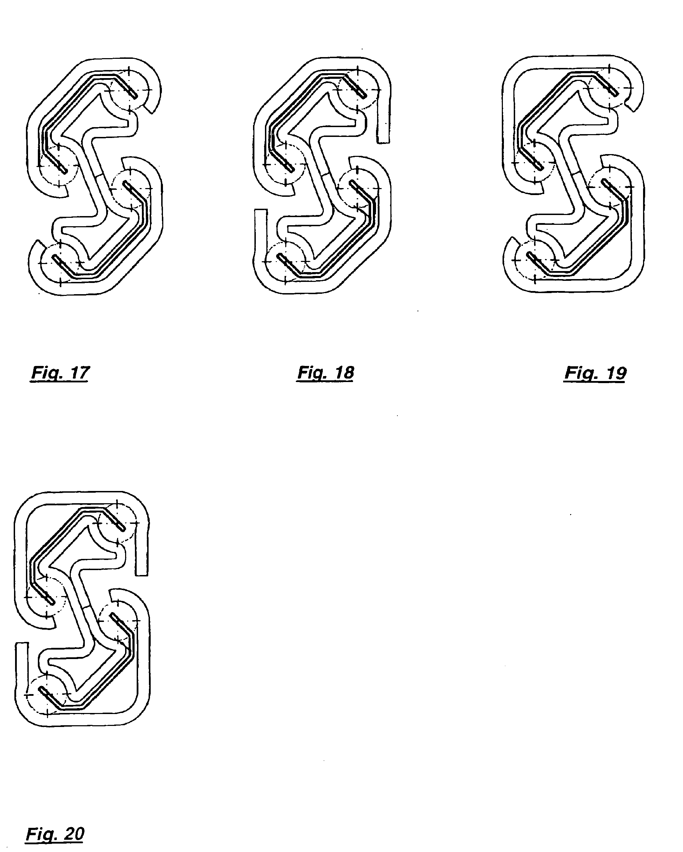

Die Figuren 9 bis 20 zeigen Ausführungsformen, bei denen der die beiden Endbereiche 3a und 3b der Innenprofilschiene 3 verbindende Abschnitt 3c zumindest bereichsweise gegenüber der Vertikalen versetzt ist. Die Innenprofilschiene 3 der Figuren 9 bis 12 weist hierfür eine Stufe bzw. Kröpfung auf. Bei den Figuren 13 bis 16 kommen in dem verbindenden Abschnitt 3c drei Lagen des zur Innenschiene profilierten Bleches übereinander zu liegen, wobei die mittlere Lage nach beiden Richtungen in den beiden Endbereichen fortgeführt wird und die beiden äußeren Lagen jeweils, ausgehend von einem der beiden Endbereiche, in dem verbindenden Abschnitt enden. In den Figuren 17 bis 20 verläuft der die beiden Endbereiche 3a und 3b verbindende Abschnitt 3c der Innenprofilschiene 3 geradlinig, jedoch gegenüber der Vertikalen schrägstehend.

Bei Verwendung der Teleskopschienen zum gleitenden Halten einer Schublade oder ähnlichem in einem Schrank wirken die größten Kräfte in Richtung der Längsachse L. Seitlich wirkende Kräfte mit geringerer Größe werden durch die versatzweise Anordnung des mittleren Abschnitts 3c gemäß den Figuren 9 bis 20 optimal aufgenommen und eine Verbiegung oder Verwindung der Innenprofilschiene vermieden.

Figur 21 zeigt eine erfindungsgemäß als Teilauszug ausgebildete kugelgelagerte Teleskopschiene 11 mit einer Außenschiene 12 und einer Innenprofilschiene 13, bestehend aus einem Endbereich 13a, einem sich davon ausgehend erstreckenden, im Querschnitt länglich ausgebildeten Steg 13c und einem Befestigungselement 13b. Die Längsachse L' des Steges 13c der Innenprofilschiene 13 ist in Figur 21 als unterbrochene Linie in vertikaler Richtung dargestellt. Der Endbereich 13a der Innenprofilschiene weist zwei Kugelführungen 17 und 17' sowie in diesen Kugelführungen satzweise abwälzbar angeordnete Kugeln 14 und 14' auf. Die beiden Kugelsätze 14 und 14' am Endbereich 13a sind in Richtung der Längsachse L' der Innenprofilschiene 13 gegeneinander versetzt, so daß eine gedachte Linie durch das Paar von Kugelsätzen 14 und 14' mit der Längsachse L' einen Winkel von etwa 45° oder weniger bildet. Die Außenschiene 12 der Teleskopschiene aus Figur 21 ist im wesentlichen C-förmig ausgebildet und umgreift mit ihren einander gegenüberliegenden freien Endabschnitten bzw. C-Schenkeln, welche nach innen gekrümmt verlaufen, die zwei zu dem Endbereich 13a der Innenprofilschiene 13 gehörenden Kugelsätze 14 und 14'. Bei der Ausführungsform gemäß Figur 21, wie auch bei den Ausführungsformen gemäß den Figuren 22 bis 24, sind Kugelkäfige vorgesehen, welche die Kugeln der Kugelsätze zusammenhalten. Die an den im Querschnitt freien Enden der Außenschiene 12 gekrümmt nach innen verlaufenden Endabschnitte bilden auf ihrer Innenseite Kugelführungen 19 und 19', die den Kugelführungen an der Innenprofilschiene 13 gegenüberliegen.

Die Innenprofilschienen 13 der Ausführungsformen nach den Figuren 21 bis 24 sind jeweils als ein zu einem Profil gebogenes Blech ausgebildet, das im Inneren einen Hohlraum aufweist. Alternativ können die innenprofilschienen jedoch auch massiv aus Metall, Kunststoff oder einem anderen Material hergestellt sein.

Die Teleskopführungen der Figuren 22, 23 und 24 weisen eine Innenprofilschiene 13 mit gleichem Querschnittsprofil wie die Ausführungsform gemäß Figur 21 auf. Auch die Anordnung der Kugelsätze und der Kugelkäfige ist die gleiche. Lediglich die Formen der Außenschienen 12 unterscheiden sich, entsprechend den Unterschieden der Außenschienen in den zuvor beschriebenen Ausführungesformen der Figuren 1 bis 4, 5 bis 8, 9 bis 12, 13 bis 16 bzw. 17 bis 20.

Das in den Figuren 21 bis 24 mit der Bezugszahl 13b bezeichnete Befestigungselement an der Innenprofilschiene ist im Querschnitt winkelförmig ausgebildet und erstreckt sich, ausgehend vom Ende des Steges 13c, in den Figuren zunächst in horizontaler Richtung nach Rechts und anschließend im wesentlichen senkrecht dazu nach oben, d. h. parallel zur Längsachse L' der Innenprofilschiene. Drei alternative Ausführungsformen des Befestigungselementes 13b sind in jeder der Figuren 21 bis 24 durch unterbrochene Linien dargestellt. Die Form des Befestigungselementes ist je nach Einsatz der Teleskopschiene passend auszuwählen und kann auch anders ausgestaltet sein als dargestellt, so daß sie den vorhandenen Befestigungsgegebenheiten genügt.

## Patentansprüche

1. Kugelgelagerte Teleskopschiene (1) mit zwei Außenschienen (2, 2') und einer im Querschnitt hantelförmigen Innenprofilschiene (3), die an ihren in Richtung ihrer Längsachse (L) gegenüberliegenden Endbereichen (3a, 3b) jeweils zwei Kugelführungen (7, 7', 8, 8') aufweist, wobei zwischen der Innenfläche (9, 9', 10, 10') der Außenschienen (2, 2') und den Kugelführungen (7, 7', 8, 8') der Innenprofilschiene (3) satzweise Kugeln (4, 4', 5, 5') abwälzbar angeordnet sind, wobei die beiden Kugelsätze (4, 4', 5, 5') an jedem Endbereich (3a, 3b) der Innenprofilschiene (3) in Richtung der Längsachse (L) sowie senkrecht zur Längsachse (L) der Innenprofilschiene (3) gegeneinander versetzt sind und jede der beiden Außenschienen (2, 2') jeweils die an einem der Endbereiche (3a, 3b) der Innenprofilschiene (3) angeordneten Kugelsätze (4, 4' bzw. 5, 5') umgreift, **dadurch gekennzeichnet, daß** an den gegenüberliegenden Endbereichen (3a, 3b) der Innenprofilschiene (3) jeweils genau zwei Sätze von Wälzkörpem, nämlich Kugelsätze (4, 4', 5, 5'), angeordnet sind.

2. Teleskopschiene nach Anspruch 1, **dadurch gekennzeichnet, daß** die Außenschienen (2, 2') im Querschnitt im wesentlichen C-förmig ausgebildet sind.

3. Teleskopschiene nach Anspruch 1, **dadurch gekennzeichnet, daß** die Außenschienen (2, 2') im Querschnitt im wesentlichen winkelförmig ausgebildet sind.

4. Teleskopschiene nach einem der Ansprüche 1 bis 3, **dadurch gekennzeichnet, daß** die Außenschienen (2, 2') gleichen Querschnitt haben.

5. Teleskopschiene nach einem der Ansprüche 1 bis 4, **dadurch gekennzeichnet, daß** der die beiden Endbereiche (3a, 3b) der im Querschnitt hantelförmigen Innenprofilschiene (3) verbindende Abschnitt (3c) der Innenprofilschiene (3) zumindest bereichsweise gegenüber der Vertikalen versetzt ist.

6. Teleskopschiene nach Anspruch 5, **dadurch gekennzeichnet, daß** der die beiden Endbereiche (3a, 3b) verbindende Abschnitt (3c) der Innenprofilschiene (3) im wesentlichen geradlinig, jedoch gegenüber der Vertikalen schrägstehend verläuft.

7. Teleskopschiene nach Anspruch 5, **dadurch gekennzeichnet, daß** der die beiden Endbereiche (3a, 3b) verbindende Abschnitt (3c) der Innenprofilschiene (3) im wesentlichen bogenförmig verläuft.

8. Teleskopschiene nach Anspruch 5, **dadurch gekennzeichnet, daß** der die beiden Endbereiche (3a, 3b) verbindende Abschnitt (3c) der Innenprofilschiene (3) ein- oder mehrmals in gleichen oder in entgegengesetzten Richtungen gekröpft oder zick-zack-förmig ausgebildet ist.

9. Kugelgelagerte Teleskopschiene (11) mit einer Außenschiene (12) und einer Innenprofilschiene (13), die einen mit zwei Kugelführungen (17, 17') versehenen Endbereich (13a) und einen sich davon ausgehend erstreckenden, im Querschnitt länglich ausgebildeten Steg (13c) aufweist, wobei zwischen der Innenfläche (19, 19') der Außenschiene (12) und den Kugelführungen (17, 17') der Innenprofilschiene (13) zwei Kugelsätze (14, 14') abwälzbar angeordnet sind, wobei die beiden Kugelsätze (14, 14') am Endbereich (13a) der Innenprofilschiene (13) in Richtung der Längsachse (L') sowie senkrecht zur Längsachse (L') des Steges (13c) gegeneinander versetzt sind und die Außenschiene (12) die am Endbereich (13a) der Innenprofilschiene (13) angeordneten Kugelsätze (14, 14') umgreift **dadurch gekennzeichnet, daß** an dem Endbereichen (13a) der Innenprofilschiene (13) genau zwei Sätze von Wälzkörpem, nämlich Kugelsätze (14, 14'), angeordnet sind.

10. Teleskopschiene nach Anspruch 9, **dadurch gekennzeichnet, daß** die Außenschiene (12) im Querschnitt im wesentlichen C-förmig ausgebildet ist.

11. Teleskopschiene nach Anspruch 9, **dadurch gekennzeichnet, daß** die Außenschiene (12) im Querschnitt im wesentlichen winkelförmig ausgebildet ist.

12. Teleskopschiene nach einem der Ansprüche 9 bis 11, **dadurch gekennzeichnet, daß** sich von dem dem Endbereich (13a) gegenüberliegenden Ende des Steges (13c) aus ein im Querschnitt vorzugsweise winkelförmiges Befestigungselement (13b) erstreckt.

13. Teleskopschiene nach einem der Ansprüche 9 bis 12, **dadurch gekennzeichnet, daß** der Steg (13c) der Innenprofilschiene (13) im wesentlichen geradlinig, jedoch gegenüber der Vertikalen schrägstehend verläuft.

14. Teleskopschiene nach einem der Ansprüche 9 bis 12, **dadurch gekennzeichnet, daß** der Steg (13c) der Innenprofilschiene (13) im wesentlichen bogenförmig verläuft.

15. Teleskopschiene nach einem der Ansprüche 9 bis 12, **dadurch gekennzeichnet, daß** der Steg (13c) der Innenprofilschiene (13) ein- oder mehrmals in gleichen oder in entgegengesetzten Richtungen gekröpft oder zick-zack-förmig ausgebildet ist.

## Claims

1. A ball-mounted telescopic rail (1) comprising two outer rails (2, 2') and an inner profile rail (3) which is dumbbell-shaped in cross-section and which has two ball guides (7, 7', 8, 8') at each of its end regions (3a, 3b) which are in opposite relationship in the direction of the longitudinal axis (L) thereof, wherein balls (4, 4', 5, 5') are rollably arranged in set-wise manner between the inner surface (9, 9', 10, 10') of the outer rails (2, 2') and the ball guides (7, 7', 8, 8') of the inner profile rail (3), wherein the two ball sets (4, 4', 5, 5') at each end region (3a, 3b) of the inner profile rail (3) are displaced relative to each other in the direction of the longitudinal axis (L) and perpendicularly to the longitudinal axis (L) of the inner profile rail (3) and each of the two outer rails (2, 2') respectively embraces the ball sets (4, 4' and 5, 5') respectively arranged at one of the end regions (3a, 3b) of the inner profile rail (3), **characterised in that** precisely two sets of rolling bodies, namely ball sets (4, 4', 5, 5') are respectively arranged at the oppositely disposed end regions (3 a, 3b) of the inner profile rail (3).

2. A telescopic rail according to claim 1 **characterised in that** the outer rails (2, 2') are of substantially C-shaped configuration in cross-section.

3. A telescopic rail according to claim 1 **characterised in that** the outer rails (2, 2') are of a substantially angular configuration in cross-section.

4. A telescopic rail according to one of claims 1 to 3 **characterised in that** the outer rails (2, 2') are of the same cross-section.

5. A telescopic rail according to one of claims 1 to 4 **characterised in that** the portion (3c) of the inner profile rail (3), which portion connects the two end regions (3a, 3b) of the inner profile rail (3) which is dumbbell-shaped in cross-section, is displaced at least region-wise with respect to the vertical.

6. A telescopic rail according to claim 5 **characterised in that** the portion (3c) of the inner profile rail (3), which portion connects the two end regions (3a, 3b), extends substantially straight but inclinedly with respect to the vertical.

7. A telescopic rail according to claim 5 **characterised in that** the portion (3c) of the inner profile rail (3), which portion connects the two end regions (3a, 3b), extends substantially arcuately.

8. A telescopic rail according to claim 5 **characterised in that** the portion (3c) of the inner profile rail (3), which portion connects the two end regions (3a, 3b), is of a cranked or zigzag-shaped configuration one or more times in the same direction or in opposite directions.

9. A ball-mounted telescopic rail (11) with an outer rail (12) and an inner profile rail (13) which has an end region (13a) provided with two ball guides (17, 17') and a limb (13c) which extends therefrom and which is of an elongate configuration in cross-section, wherein two ball sets (14, 14') are arranged rollably between the inner surface (19, 19') of the outer rail (12) and the ball guides (17, 17') of the inner profile rail (13), wherein the two ball sets (14, 14') at the end region (13a) of the inner profile rail (13) are displaced relative to each other in the direction of the longitudinal axis (L') and perpendicularly to the longitudinal axis (L') of the limb (13c) and the outer rail (12) embraces the ball sets (14, 14') arranged at the end region (13a) of the inner profile rail (13), **characterised in that** precisely two sets of rolling bodies, namely ball sets (14, 14') are arranged at the end regions (13a) of the inner profile rail (13).

10. A telescopic rail according to claim 9 **characterised in that** the outer rail (12) is of substantially C-shaped configuration in cross-section.

11. A telescopic rail according to claim 9 **characterised in that** the outer rail (12) is of a substantially angular configuration in cross-section.

12. A telescopic rail according to one of claims 9 to 11 **characterised in that** a fixing element (13b) which is preferably of angular cross-section extends from the end of the limb (13c), which is opposite to the end region (13a).

13. A telescopic rail according to one of claims 9 to 12 **characterised in that** the limb (13c) of the inner profile rail (13) extends substantially straight but inclinedly with respect to the vertical.

14. A telescopic rail according to one of claims 9 to 12 **characterised in that** the limb (13c) of the inner profile rail (13) extends substantially arcuately.

15. A telescopic rail according to one of claims 9 to 12 **characterised in that** the limb (13c) of the inner profile rail (13) is of a cranked or zigzag-shaped configuration one or more times in the same direction or in opposite directions.

## Revendications

1. Glissière télescopique (1) montée sur billes, la glissière télescopique comportant deux glissières extérieures (2, 2') et une glissière profilée intérieure (3) en forme d'haltère qui comporte deux guides de billes (7, 7', 8, 8') au niveau de chacune de ses régions d'extrémité (3a, 3b) opposées par référence à la direction de leur axe longitudinal (L), des billes (4, 4', 5, 5') étant disposées par groupes de façon à pouvoir rouler entre la surface intérieure (9, 9', 10, 10') des glissières extérieures (2, 2') et les guides de billes (7, 7', 8, 8') de la glissière profilée intérieure (3), les deux groupes de billes (4, 4', 5, 5') étant décalés l'un par rapport à l'autre au niveau de chaque région d'extrémité (3a, 3b) de la glissière profilée intérieure (3) en direction de l'axe longitudinal (L) ainsi que perpendiculairement à l'axe longitudinal (L) de la glissière profilée intérieure (3) et chacune des deux glissières extérieures (2, 2') enveloppant les ensemble de billes (4, 4' respectivement 5, 5') au niveau de l'une des régions d'extrémité (3a, 3b) de la glissière profilée intérieure (3), **caractérisée en ce que** exactement deux ensembles de corps roulants, c'est-à-dire des ensembles de billes (4, 4', 5, 5'), sont disposés au niveau des régions d'extrémité opposées (3a, 3b) de la glissière profilée intérieure (3).

2. Glissière télescopique selon la revendication 1, **caractérisée en ce que** les glissières extérieures (2, 2') sont conformées sensiblement en C en coupe transversale.

3. Glissière télescopique selon la revendication 1, **caractérisée en ce que** les glissières extérieures (2, 2') sont conformées sensiblement angulairement en coupe transversale.

4. Glissière télescopique selon l'une des revendications 1 à 3, **caractérisée en ce que** les glissières extérieures (2, 2') ont la même section.

5. Glissière télescopique selon l'une des revendications 1 à 4, **caractérisée en ce que** la portion (3c) de la glissière profilée intérieure (3), qui relie les deux régions d'extrémité (3a, 3b) de la glissière profilée intérieure (3) en forme d'haltère en coupe transversale, est décalée au moins par zones par rapport à la verticale.

6. Glissière télescopique selon la revendication 5, **caractérisée en ce que** la portion (3c) de la glissière profilée intérieure (3), qui relie les deux régions d'extrémité (3a, 3b), s'étend de façon sensiblement rectiligne, mais obliquement par rapport à la verticale.

7. Glissière télescopique selon la revendication 5, **caractérisée en ce que** la portion (3c) de la glissière profilée intérieure (3), qui relie les deux régions d'extrémité (3a, 3b), s'étend sensiblement en arc.

8. Glissière télescopique selon la revendication 5, **caractérisée en ce que** la portion (3c) de la glissière profilée intérieure (3), qui relie les deux régions d'extrémité (3a, 3b), est coudée une ou plusieurs fois dans le même sens ou dans des sens opposés ou est conformée en zigzag.

9. Glissière télescopique (11) montée sur billes, la glissière télescopique comportant une glissière extérieure (12) et une glissière profilée intérieure (13) qui comporte une région d'extrémité (13a) dotée de deux guides de billes (17, 17') et une aile (13c) s'étendant depuis ladite région d'extrémité et présentant une forme allongée en coupe transversale, deux billes (14, 14') étant disposées par groupes de façon à pouvoir rouler entre la surface intérieure (19, 19') de la glissière extérieure (12) et les guides de billes (17, 17') de la glissière profilée intérieure (13), les deux groupes de billes (14, 14') étant décalés l'un par rapport à l'autre au niveau de la région d'extrémité (13a) de la glissière profilée intérieure (13) en direction de l'axe longitudinal (L') ainsi que perpendiculairement à l'axe longitudinal (L') de l'aile (13c) et la glissière extérieure (12) enveloppant les ensembles de billes (14, 14') disposés au niveau de la région d'extrémité (13a) de la glissière profilée intérieure (13), **caractérisée en ce que** exactement deux ensembles de corps roulants, c'est-à-dire des ensembles de billes (14, 14'), sont disposés au niveau de la région d'extrémité (13a) de la glissière profilée intérieure (13).

10. Glissière télescopique selon la revendication 9, **caractérisée en ce que** la glissière extérieure (12) est conformée sensiblement en C en coupe transversale.

11. Glissière télescopique selon la revendication 9, **caractérisée en ce que** la glissière extérieure (12) est conformée sensiblement angulairement en coupe transversale.

12. Glissière télescopique selon l'une des revendications 9 à 11, **caractérisée en ce qu'**un élément de fixation (13b), avantageusement de forme angulaire en coupe transversale, s'étend depuis l'extrémité de l'aile (13c) qui est opposée à la région d'extrémité (13a).

13. Glissière télescopique selon l'une des revendications 9 à 12, **caractérisée en ce que** l'aile (13c) de la glissière profilée intérieure (13) s'étend de façon sensiblement rectiligne, mais obliquement par rapport à la verticale.

14. Glissière télescopique selon l'une des revendications 9 à 12, **caractérisée en ce que** l'aile (13c) de la glissière profilée intérieure (13) s'étend sensiblement en arc.

15. Glissière télescopique selon l'une des revendications 9 à 12, **caractérisée en ce que** l'aile (13c) de la glissière profilée intérieure (13) est coudée une ou plusieurs fois dans le même sens ou dans des sens opposés ou est conformée en zigzag.
